# EUROPEAN PATENT APPLICATION

(11) **EP 1 936 399 A2**
(43) Date of publication of application: **25.06.2008**
(21) Application number: 07123638.4
(22) Date of filing: 19.12.2007
(51) Int. Cl.: G01S 7/481, G01S 7/497, G01S 17/42, G01S 17/87, G02B 26/10

(54) **Profiling device**

(30) Priority: 20.12.2006 GB 0625442
(71) Applicant: CSL Surveys (Stevenage) limited, 16 Leyden Road SG1 2BP Hertfordshire Stevenage (GB)
(72) Inventor: Spencer, Nathan, Croxton, Cambridgeshire PE19 6SX (GB)
(74) Representative: Gill, David Alan

(57) **Abstract**

The present invention provides a profiling device 10 comprising an emitter arranged to emit a pulse of electromagnetic radiation towards a remote surface; a detection means arranged to receive the pulse of electromagnetic radiation once reflected from said remote surface; means 16 for altering a direction from which successive pulses of electromagnetic radiation are emitted from said profiler to cause successively emitted pulses of electromagnetic radiation to be emitted in a plurality of different directions in the same plane throughout 360 degrees; an elapsed time measuring device for measuring the time between emission of a pulse of electromagnetic radiation in one of said plurality of different directions and reception of said pulse of electromagnetic radiation reflected from said remote surface; storage means for storing measured elapsed time data; and means 22, 24 for defining a reference position for indicating when said pulses of electromagnetic radiation have been emitted over the said 360 degrees.

## Description

The present invention relates to a profiling device and particularly, but not exclusively, to a profiling device which is portable.

Scanners capable of providing three-dimensional (3D) profiles of a real-world object or environment are well known. Data is collected relating to the shape of the object or surfaces in the environment and such collected data can then be used to construct digital, 3D models that are used in a variety of applications.

Known 3D scanners are arranged to create a "point cloud" of geometric samples on the surface of the subject being scanned. These points can then be used to extrapolate the shape of the subject in a process known as reconstruction.

3D scanners, like cameras, have a cone-like field of view and, also like cameras, they can only collect information about surfaces that are not obscured. 3D scanners are arranged to collect distance information about surfaces within the scanner's field of view and the resulting "picture" produced by the scanner describes the distance to a surface at each point in the picture.

If the 3D scanner is considered to be at the origin of a spherical, polar, coordinate system (i.e. containing θ, ϕ and r components), then each point in the picture is associated with a θ-component and a ϕ-component. Together with distance between the 3D scanner (at the origin) and a point in question, corresponding to the *r-*component, these spherical coordinates fully describe the 3D position of each point in the picture, in a local coordinate system relative to the scanner.

"Time-of-flight" scanners are a particular type of 3D scanner which use laser light to probe a subject. A main component of such scanners is a laser range finder, which determines the distance between the scanner and a point on the subject surface by measuring the time taken for a pulse of laser light emitted by the laser range finder to complete a round-trip between the scanner and the subject. A laser in the scanner is arranged to emit a pulse of light and the amount of time before the reflected light is seen by a detector is timed. As the speed of light c is a known constant, the round-trip time determines the total distance travelled by the light between the scanner and a point on the subject surface (which will be twice the distance between the scanner and the surface). If *t* represents the round-trip time, then the distance r between the scanner and the point on the subject surface is equal to *c.t*/2.

As the laser range finder only determines the distance between the scanner and one point in its direction of view, the 3D scanner is arranged to create a surface profile of the subject by changing the direction of view of the laser range finder to scan different points within the entire field of view of the scanner one point at a time. This can be achieved by using a system of rotating mirrors mounted upon the scanner and arranged to deflect the laser light emitted by the laser range finder in different directions depending upon the orientation of the mirror system.

A number of fields rely upon the production of precise two-dimensional 2D floor plans, or 2D vertical elevations, of buildings. Such floor plans/vertical elevations can be produced using sketches and tape measures, and generating the plans/elevations in a CAD system.

Alternatively, such floor plans/vertical elevations can be created by using a 3D scanner of the type described above to obtain a point cloud for the building surfaces and subsequently "slicing" the resultant cloud horizontally or vertically to provide a 2D floor plan or 2D vertical elevation respectively.

Although 3D scanners can be used in such a way to obtain a 2D surface profile, the necessity for the 3D scanner to complete a 360 degree horizontal scan and a 180 degree vertical scan proves uneconomic in providing such 2D surface profiles since, in view of the complexity of 3D scanners, the set-up time is disproportionately large compared to the amount of acquired data which will actually be used. Such 3D scanners are also an expensive means for obtaining such data and are often bulky in nature and may prove difficult to move around in confined environments.

There is a need for a cheaper, more portable, profiling device, which is arranged to solely produce 2D profiles of a building, and which eliminates the need to create sketches, and measure the dimensions, of a building.

A conventional 2D scanner is known which comprises a laser range finder and a rotating mirror. Such a scanner requires a desktop PC and specialist Peripheral Component Interconnect (PCI) card to match the distance data output from the laser range finder with angular data output from an encoder attached to the mirror.

A drawback of such a device is that portability is compromised since it must be connected to a desktop PC. This device is also fairly complex due to there being two data streams involved in the collection of surface profile data.

The present invention seeks to provide for a profiling device having advantages over known such profiling devices.

According to an aspect of the present invention, there is provided a profiling device comprising an emitter arranged to emit a pulse of electromagnetic radiation toward a remote surface; a detection means arranged to receive the pulse of electromagnetic radiation once reflected from said remote surface; means for altering a direction from which successive pulses of electromagnetic radiation are emitted from said profiler to cause successively emitted pulses of electromagnetic radiation to be emitted in a plurality of different directions in the same plane throughout 360 degrees; an elapsed time measuring device for measuring the time between emission of a pulse of electromagnetic radiation in one of said plurality of different directions and reception of said pulse of electromagnetic radiation reflected from said remote surface; storage means for storing measured elapsed time data; and means for defining a reference position for indicating when said pulses of electromagnetic radiation have been emitted over the said 360 degrees.

An advantage of such a profiling device is that it is only required to measure and record one data stream (i.e. the time taken for an emitted pulse of light to be reflected back from the remote surface and detected by the detection means). Therefore, the profiling device is much less complex than those of the prior art and also does not require a PC in order to operate and collect data. Thus, the size of the profiling device is considerably more manageable and therefore allows the profiling device to be portable.

Preferably, said direction altering means comprises actuation means arranged to rotate both said emitter and detection means in common.

Alternatively, said direction altering means comprises actuation means arranged to rotate a mirror arrangement attached thereto, and wherein said mirror arrangement is arranged to receive incident pulses of electromagnetic radiation emitted by said emitter and subsequently reflect said pulses of electromagnetic radiation towards said remote surface, said mirror arrangement also arranged to receive incident pulses of electromagnetic radiation reflected by said remote surface and subsequently reflect said incident pulses of electromagnetic radiation reflected by said remote surface towards said detection means.

Further, said actuation means is arranged to rotate in a continuous manner and said pulses of electromagnetic radiation are emitted at predefined intervals.

Alternatively, said actuation means is arranged to rotate in a stepwise manner and said pulses of electromagnetic radiation are emitted at each step during rotation by said actuation means.

Conveniently, said actuation means comprises a motor.

Also, said profiling device further comprises a control means arranged to control operation of said profiling device.

Advantageously, said profiling device further comprises an interface to enable data stored in said storage means to be transferred to a peripheral device.

Such a feature is advantageous in that it allows the profiling device to be fully portable. The measured elapsed time data is stored in the storage means for download to PC, etc. at a later time for operation on the stored data.

Preferably, said electromagnetic radiation comprises light, and more preferably comprises visible light.

If required, said emitter comprises a laser emitter.

In particular, said detection means comprises a photodetector.

Preferably, said means for defining a reference position comprises an element mounted upon said profiling device at a fixed distance from said emitter and comprising surfaces of differing reflectivity.

Further, the profiling device is for use in creating a two dimensional view of the surface of a feature being profiled.

Conveniently, said two dimensional view comprises one of a plan view or a side view.

Also, said surface of said feature being profiled comprises walls of a building.

In particular, the profiling device is for use in counting objects passing said profiling device.

Also, said objects comprise vehicles.

According to another aspect of the present invention, there is provided a method of profiling a surface comprising: emitting a pulse of electromagnetic radiation towards a remote surface; detecting the pulse of electromagnetic radiation once reflected from said remote surface; altering a direction from which successive pulses of electromagnetic radiation are emitted to cause successively emitted pulses of electromagnetic radiation to be emitted in a plurality of different directions in the same plane throughout 360 degrees; measuring an elapsed time between emission of a pulse of electromagnetic radiation in one of said plurality of different directions and reception of said pulse of electromagnetic radiation reflected from said remote surface; storing said elapsed time data; and defining a reference position for indicating when said pulses of electromagnetic radiation have been emitted over the said 360 degrees.

Preferably, said altering step comprises rotating both an emitter for emitting said pulse of electromagnetic radiation and a detector for receiving the pulse of electromagnetic radiation once reflected in common.

Alternatively, said altering step comprises rotating a mirror arrangement, where said mirror arrangement is arranged to receive incident pulses of electromagnetic radiation emitted by an emitter in said emission step and subsequently reflect said pulses of electromagnetic radiation towards said remote surface, said mirror arrangement also arranged to receive incident pulses of electromagnetic radiation reflected by said remote surface and subsequently reflect said incident pulses of electromagnetic radiation reflected by said remote surface towards a detection means.

Conveniently, said rotation is continuous and said pulses of electromagnetic radiation are emitted at predefined intervals.

Alternatively, said rotation is stepwise and said pulses of electromagnetic radiation are emitted at each step during rotation.

If required the method further comprises transferring stored elapsed time data to a peripheral device.

Preferably, said electromagnetic radiation comprises light, and more preferably comprises visible light.

According to another aspect of the present invention, there is provided a profiling device comprising at least one processing device arranged to communicate with a network of processing devices located in a fixed relationship relative to each other at various positions about a structure to be profiled, said at least one processing device being arranged to communicate with each processing device of said network in order to allow the positional co-ordinates of the profiling device to be determined, and wherein a plurality of determined positional co-ordinates of said profiling device each corresponding to a particular location of the profiling device about the structure to be profiled enable a co-ordinate map of at least one of vertices, edges and surfaces of the structure to be obtained.

Preferably, said at least one processing device of said profiling device and said processing devices of said network comprise microelectromechanical devices arranged to communicate with each other wirelessly.

Conveniently, each of the processing devices of said network is arranged to transmit a signal to the at least one processing device of the profiling device and, upon receipt of such signals, the at least one processing device of the profiling device is arranged to transmit a corresponding return signal to each of the respective processing devices of said network, each processing device of said network being arranged to measure the elapsed time between transmission of said signal and reception of said corresponding return signal and for storing said elapsed time data, wherein the position of the profiling device is determined by correlating the elapsed time data stored in each processing device of the network and converting such data to positional data.

Further, said profiling device comprises an elongate member with a processing device at each end thereof.

In particular, said profiling device comprises an additional processing device for storing positional data of said profiling device received from said network of processing devices.

Also, said additional processing device is configured to allow transfer of positional data stored thereon to a processing means.

Preferably, said at least one processing device of said profiling device and said processing devices of said network comprise Motes.

The present invention is described further hereinafter, by way of example only, with reference to the accompanying drawings in which:
Fig. 1 illustrates a side view of a profiling device in a particular embodiment of the present invention;
Fig. 2 illustrates a schematic block diagram of the profiling device of Fig. 1;
Fig. 3 illustrates a perspective side view of the profiling device of Fig. 1 with part of a protective housing removed;
Fig. 4a illustrates a reference element of the profiling device of Fig. 1;
Fig. 4b illustrates the function of the reference element of Fig. 4a;
Fig. 5 illustrates a flow diagram of method steps performed by the profiling device during operation;
Fig. 6a illustrates a schematic perspective view of the profiling device of Fig. 1 in use within a building;
Fig. 6b illustrates a plan view of the illustration of Fig. 6a;
Fig. 7 illustrates a schematic plan view of the profiling device of Fig. 1 in use as it is moved through a building;
Fig. 8 illustrates a schematic side view of the profiling device of Fig. 1 in use when profiling a building exterior;
Fig. 9 illustrates a schematic side view of the profiling device of Fig. 1 in use for the purpose of counting traffic;
Fig. 10a illustrates a schematic side view of the profiling device of Fig. 1 in use for providing a profile of a road surface;
Fig. 10b illustrates a schematic plan view of the illustration of Fig. 10a; and
Fig. 11 illustrates a perspective view of a profiling device in another embodiment of the present invention.

Figs. 12a-12c illustrate a schematic view of a simplified arrangement of the present invention.

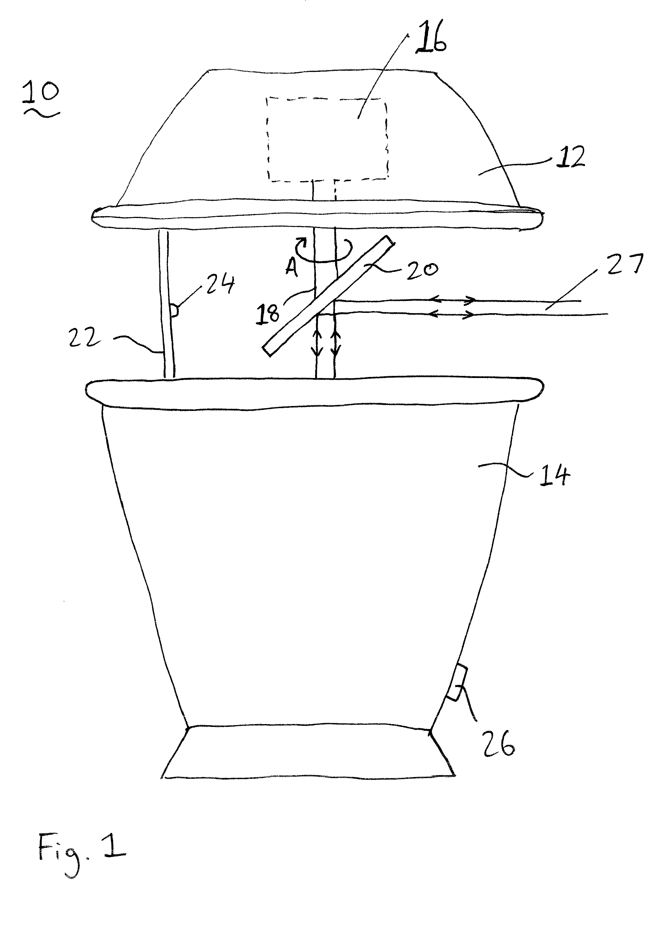

As mentioned, Fig. 1 illustrates a profiling device 10 which is arranged to provide a 2D profile of, for example, a room within a building. The profiling device 10 comprises an upper protective casing 12 and a lower protective casing 14 located adjacent to, but spaced from the upper protective casing 12.

Upper protective casing 12 is arranged to house a motor 16 (illustrated by way of a dotted line) from which there extends a shaft 18. At the end of the shaft 18 there is provided a mirror 20 which is mounted upon said shaft 18 at an angle of 45 degrees to a plane normal to the axis of the shaft. The motor 16 is arranged to cause the shaft 18 (and consequently the mirror 20) to rotate in a direction as indicated by the arrow A in the figure.

A reference strip 22 having thereon a reference dot 24 is located in the space between the upper and lower protective casings 12, 14 and is mounted such that it upstands from the lower protective casing 14. The profiling device 10 also comprises an interface 26 for connection with peripheral devices (for example, a PC for downloading data).

The profiling device 10 is arranged to emit pulses of light 27 from a light emitter (not shown) in the lower protective casing 14. The emitted pulse of light 27 is incident upon mirror 20 at an angle of 45 degrees and is reflected in a direction perpendicular to the incident portion of the pulse of light 27. As stated previously, the mirror 20 is arranged to rotate about the axis of shaft 18 and so the pulse of light 27 incident upon the mirror 20 will perform a 360 degree "sweep" in a two-dimensional plane as the mirror 20 rotates and reflects the pulses of light 27 in different directions.

When the emitted pulse of light 27 reaches a remote surface, part of the pulse of light 27 will be reflected back towards the profiling device 10. The reflected pulse of light 27 will be incident upon mirror 20 and will subsequently be reflected into the lower protective casing 14 of profiling device 10 for detection by a light detector (not shown).

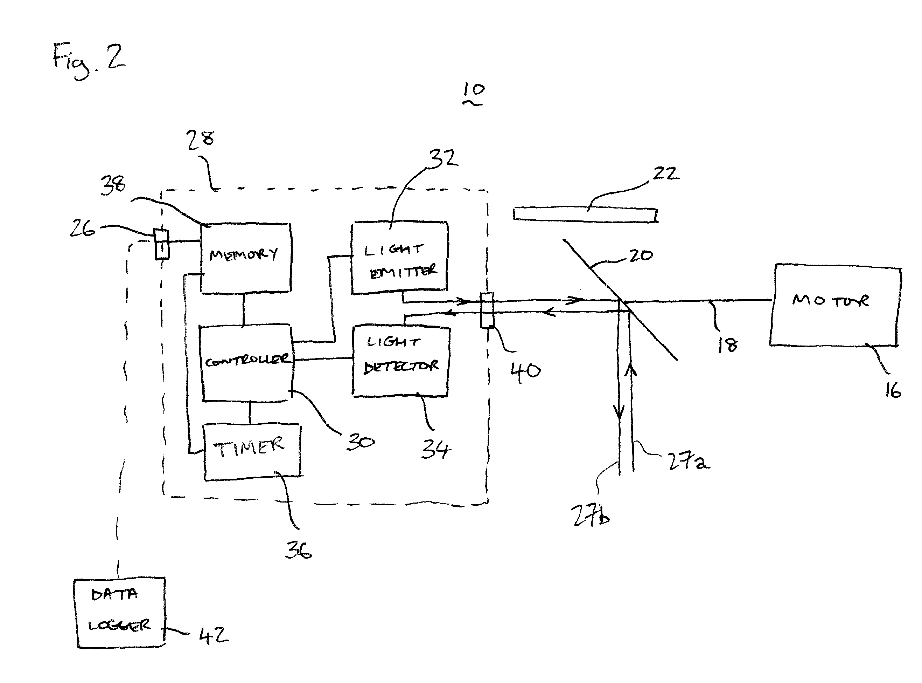

Fig. 2 illustrates the components which comprise the profiling device 10. As can be seen from Fig. 2, an operational means 28 (normally housed within the lower protective casing 14) comprises a controller 30, a light emitter 32, a light detector 34, a timer 36 and a memory 38.

The controller 30 is arranged to control operation of the light emitter 32 and light receiver 34, and also operation of timer 36. During operation, the light emitter 32 is arranged to emit a pulse of light 27a through aperture 40 in said operational means 28 towards mirror 20. The pulse of light 27a incident upon mirror 20 is reflected from the mirror 20 at an angle of 90 degrees to the incident pulse of light 27a. This reflected pulse of light 27a will travel towards a remote surface, from which it is reflected back (denoted by 27b) towards mirror 20 and subsequently reflected by mirror 20 through aperture 40 for detection by the light detector 34. Upon emission of the pulse of light 27a from light emitter 32, a timing count is initiated by timer 36, and this timing count is arranged to continue until a reflected beam is received in the light detector 34, at which time the timing count is ceased. The value of the timing count is stored in the memory 38 for later download to, for example, a data logger 42 which can be attached to the operational means 28 via interface 26. As mentioned above, the mirror is arranged to rotate through 360 degrees by discrete steps and so the above process of emitting a pulse of light 27a, detecting a corresponding pulse of light 27b reflected from a remote surface and recording the elapsed time between emission and detection is carried out with the mirror at each discrete point in its 360 degree rotation.

Therefore, a plurality of timing count values will be stored in the memory 38, with each relating to the time taken for a respective emitted pulse of light 27a to travel to a remote surface and be reflected back from the remote surface for each angle of the mirror during its 360 degree rotation.

In particular arrangements of this embodiment, the data logger 42 may be replaced by a Personal Digital Assistant (PDA), laptop computer, palmtop, etc.

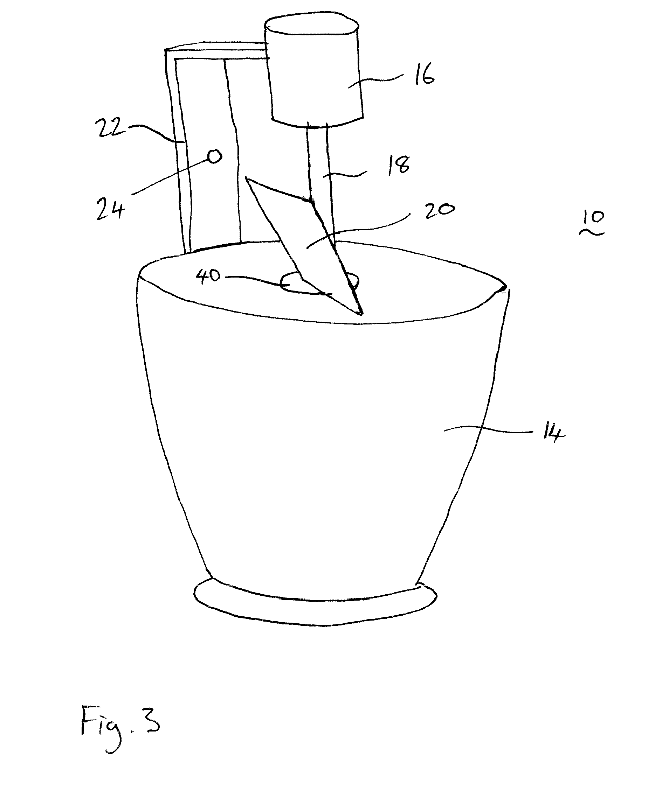

Fig. 3 illustrates the profiling device 10 of Fig. 1, but with the upper protective casing removed to reveal the motor 16. Also illustrated in this figure is the aperture 40 through which light emitted by the light emitter located within the lower protective casing 14 is transmitted towards mirror 20. Also, light reflected from a remote surface and incident upon the mirror 20 will be reflected back through aperture 40 to a light detector (not shown) for processing by the operational means 28.

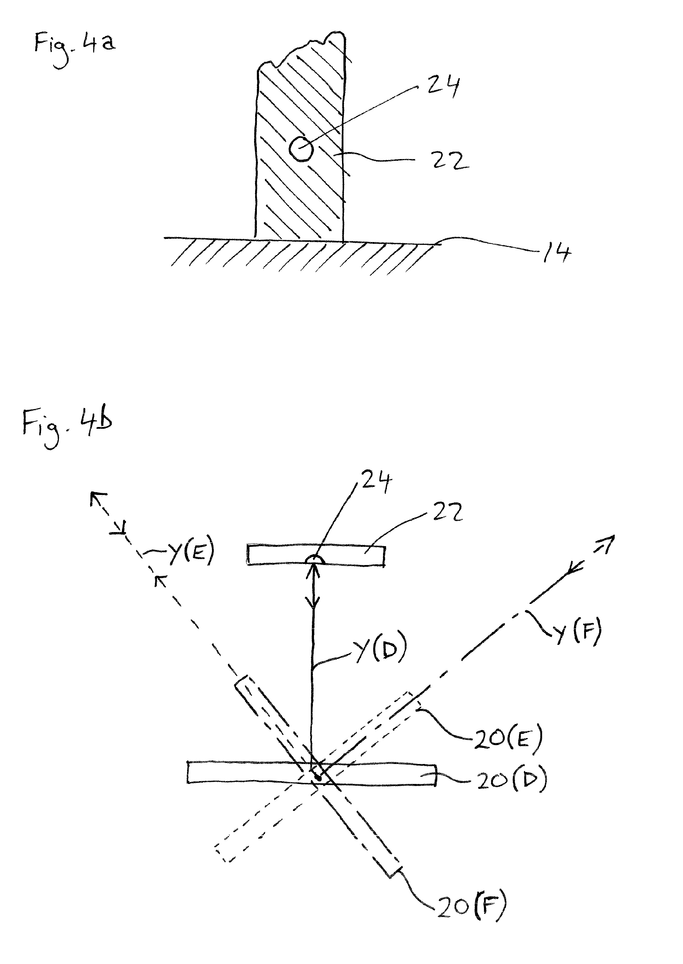

The reference strip 22 and reference dot 24 are illustrated more clearly in Fig. 4a. The reference strip 22 comprises a dark coloured material and the reference dot is a light coloured material (preferably white). Of course, this arrangement could be reversed in an alternative embodiment.

The reference strip 22 and reference dot 24 are arranged such that during rotation of the mirror 20 of the profiling device 10, a point will be reached where a pulse of light emitted from the light emitter will be reflected (by the mirror) towards the reference strip 22. As subsequently emitted pulses of light sweep over the reference strip, there will be a point where one emitted pulse of light is incident upon reference strip 22, but the next emitted pulse of light is incident upon the reference dot 24 (or vice versa). The reflectivity/absorption of the surface changes (since black absorbs more light than white) and there will be a distinct spike in the amplitude of the beam reflected by the reference strip 22 and also the measured elapsed time from emission to detection is more specific than for a beam emitted towards and reflected from a remote surface. When the light detector detects a pulse of light reflected from the reference strip 22/ reference dot 24 the time counter will register a much smaller value for the time count than in the case where a beam is reflected from a remote surface. When recorded time and data is operated upon by a user, the time data corresponding to the point where the pulse of light is reflected by the reference dot 24 will be distinctive as the value will be much smaller than other values corresponding to beams reflected from remote surfaces. Therefore, a user will be able to determine when a complete revolution of the mirror has been completed.

Fig. 4b illustrates the positional relationship between the mirror 20 and the reference strip 22 with the mirror at three different positions D, E and F, during its rotation. A mirror located in a first position D (denoted by mirror 20(D)) is arranged to reflect an emitted pulse of light along a path Y(D) directly at the reference strip 22, and the pulse of light reflected by the reference dot 24 travels along the same path Y(D) back to the mirror 20(D). When in a second position E (denoted by mirror 20(E)) the mirror is arranged to reflect an emitted pulse of light along a path Y(E) and, upon reflection of the pulse of light from a remote surface, the reflected pulse of light will travel back along the same path Y(E) to mirror 20(E). When in a third position F (denoted by mirror 20(F)) the mirror is arranged to reflect an emitted pulse of light along path Y(F) and, upon reflection of the pulse of light from a remote surface, the reflected pulse of light will travel back along path Y(F) to mirror 20(F).

It can clearly be seen that the length of path Y(D) is smaller than the lengths of the other paths Y(E), Y(F). Further, the length of path Y(D) is fixed and as such the time for the emitted pulse of light to travel to the reference dot 24 and be reflected back to the light detector will also be fixed.

The motor may be a variable speed motor geared to allow one rotation of the shaft between approximately every 20 seconds and approximately every 1 second and is, as mentioned above, arranged to rotate a shaft (and ultimately a mirror attached to the shaft) by discrete steps upon receiving a data signal from the controller.

The aforementioned change in amplitude of the pulse of light (corresponding to a distinct "spike") when reflected by the reference dot provides a reference point during each 360 degree rotation of the mirror. The angular shift of the mirror between successive "steps" of the motor can easily be calculated by determining the number of pulse emission/pulse recordal operations between successive "spikes" and then dividing 360 degrees by this figure.

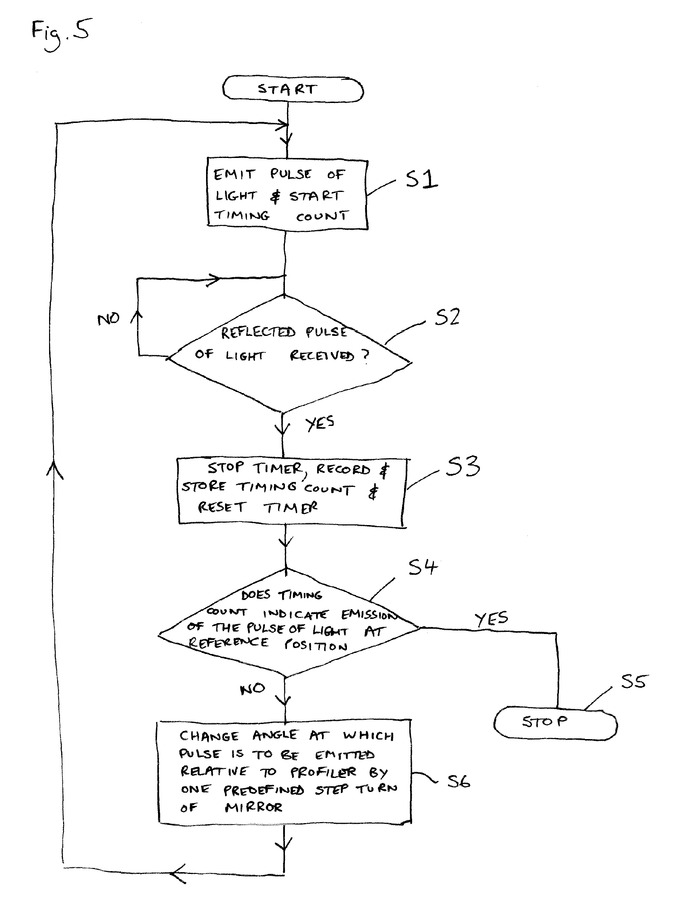

Figure 5 illustrates the method steps involved in operating the profiling device of the present invention. In an initial step S1, a pulse of light is emitted from the light emitter and the timing count is started. The controller monitors an output from the light detector to determine if a pulse of light reflected from a remote surface has been received by the profiling device 10 in a step S2. Such a process is repeated until it is determined that a reflected pulse of light has indeed been received by the light detector.

Upon reception of this reflected pulse of light, the timer is stopped and the elapsed time (corresponding to the timing count) from emission of the pulse of light to reception of the reflected pulse of light by the light detector is recorded in the memory and, upon recordal, the timer is reset (see step S3). In addition to recordal of the elapsed time in the memory, the controller determines if the elapsed time data indicates if the emitted pulse of light was emitted towards the reference dot. The elapsed time data is compared to a reference value to determine if this is indeed the case (step S4). If so, the process is stopped (step S5). However, if it is determined that the pulse of light was not emitted towards the reference dot, the controller is arranged to send a data signal to the motor instructing the motor to perform a single step rotation to move the mirror by a single discrete step and thereby changing the angle at which a subsequently emitted pulse of light is emitted in the two-dimensional emission plane (see step S6). Upon completion of this step, the process returns to step S1 and the entire process is repeated again.

Each distance from the profiling device 10 to the remote surface corresponding to each pulse emission/pulse recordal operation is calculated by multiplying the recorded elapsed time *t* value for each pulse emission/pulse recordal operation by the speed of light c and dividing the result by two (i.e. *c.t*/2). Such an operation can be carried out upon a suitable processing device after download of the stored timing data from the profiling device 10. The processing device can then operate upon the calculated distance data to build a 2D image of the profiled area/surface.

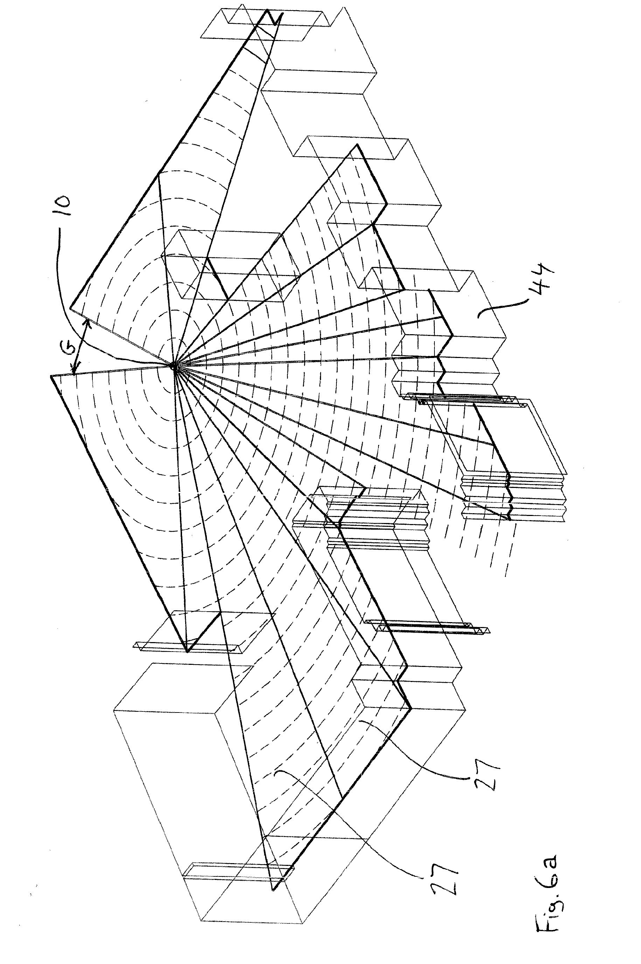

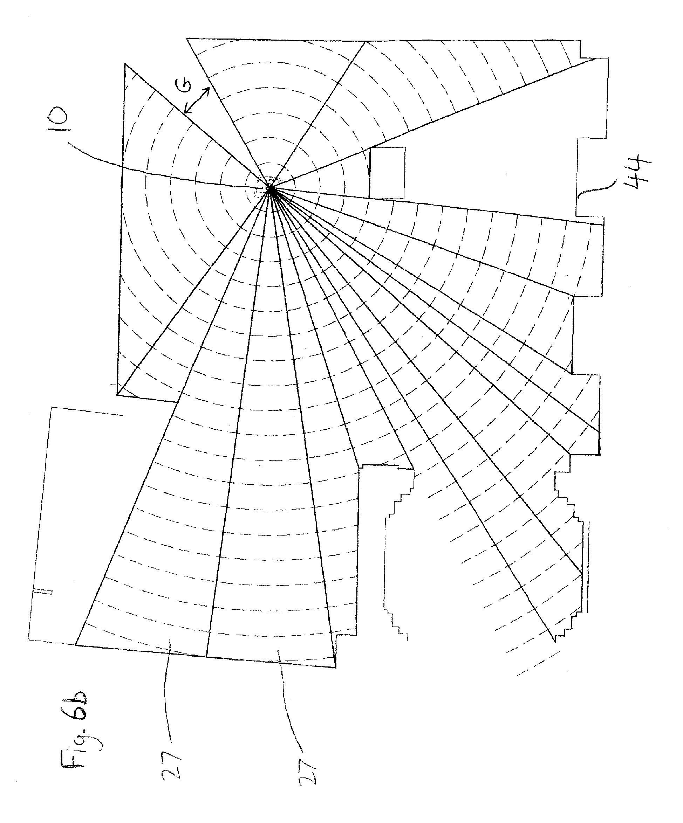

Figs. 6a and 6b illustrate perspective and plan views respectively of the profiling device 10 in operation in a room within a building. The profiling device 10 is located within the room and emitted/reflected light pulses 27 are shown emanating from the profiling device 10 and being reflected by the surface features of the room, such as walls 44. It can be seen that emitted pulses of light 27 are incident upon the walls 44 of the room and are reflected from the walls 44 back to the profiling device 10.

These figures also illustrate a "blind-spot" G of the profiling device 20 which corresponds to an area into which no pulses of light are emitted, and which corresponds to an area behind the reference strip of the profiling device 10.

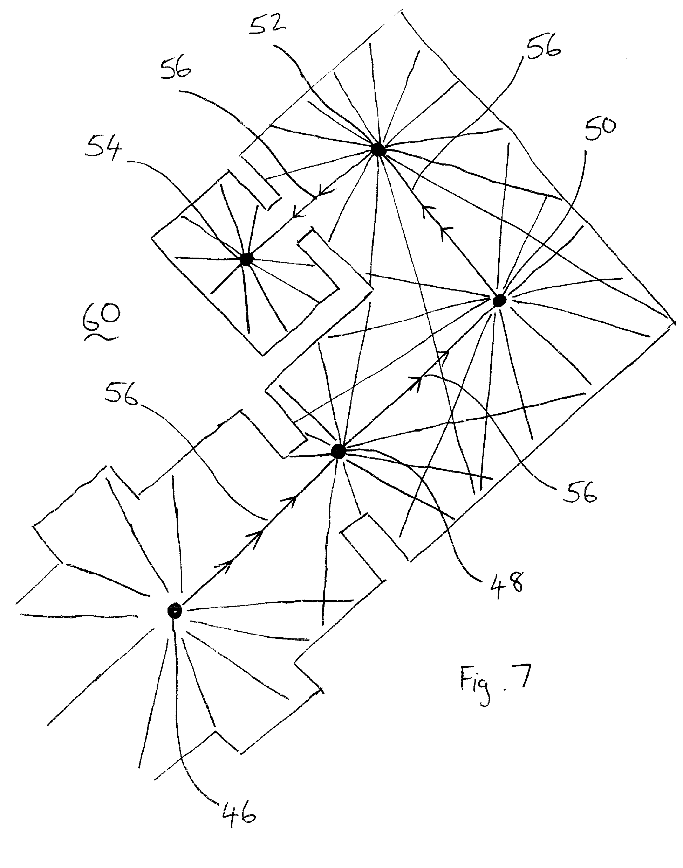

Fig. 7 illustrates a further use of the profiling device 10 whereby the device can be located at different points 46, 48, 50, 52 and 54 within a building 60. By carrying out the profiling process at each one of these points, a complete two dimensional profile of the building can be obtained. Therefore, the present invention enables measurement and mapping of a building as an operator moves around the building. The position of the device is, in such a case, determined by relative shifts in the data captured. This can be determined in a PC using software upon download of the data captured by the profiling device to the PC.

The path taken by the operator between each of the points 46, 48, 50, 52 and 54 is denoted by the line 56.

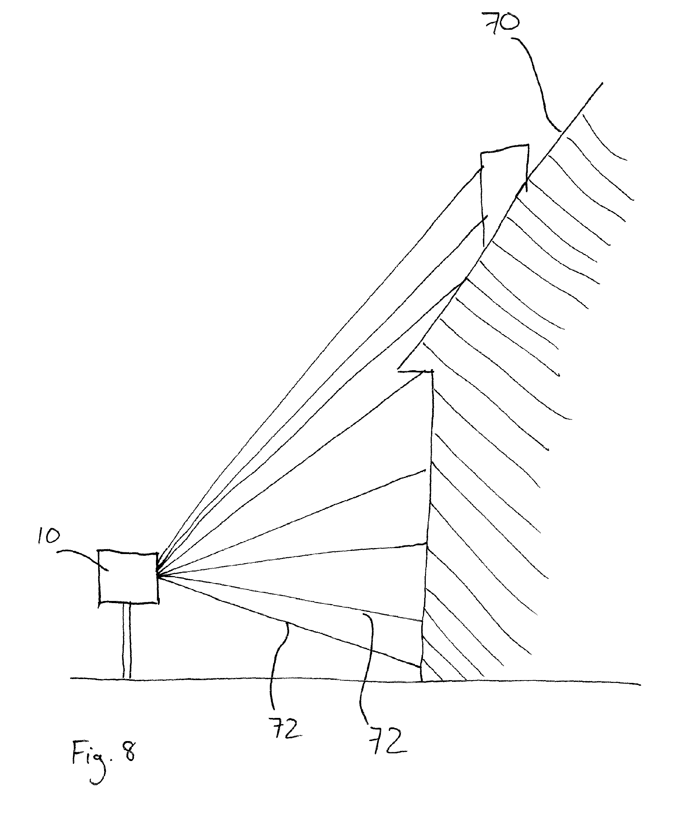

Fig. 8 illustrates another application of the profiling device 10 in scanning the external surface of a building 70 in a vertical plane to provide a two dimensional profile of an external surface of a building in a particular plane.

The profiling device 10 is located at a convenient position adjacent the surface to be profiled and begins a process of emitting pulses of light (denoted by lines 72) towards the surface to be profiled. As described above, the elapsed time between emission of a pulse of light and reception of the same pulse reflected from a remote surface is measured and recorded. This elapsed time data is later used to calculate the distance from the profiling device 10 to the surface to be profiled (i.e. using the equation *c*.*t*/*2* as described earlier).

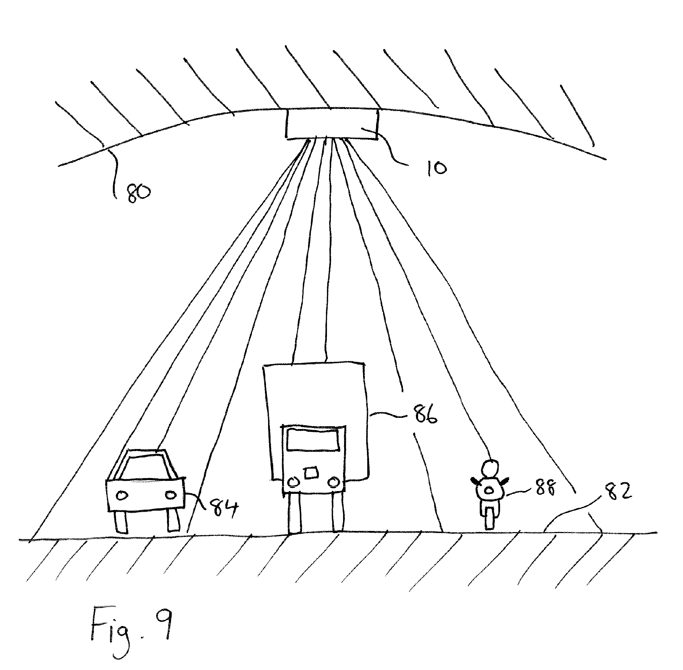

In another alternative use illustrated in Fig. 9, a profiling device 10 can be used to scan a road surface 82 and detect the passing of vehicles 84, 86, 88 under the areas swept out by pulses of light emitted by the device. As vehicles pass through the area swept out by the profiling device 10 the time taken for emitted pulses of light to return from a remote surface will vary depending on whether the remote surface comprises that of a vehicle or that of the road. Such an arrangement can be used in an application to count vehicles passing under the profiling device 10.

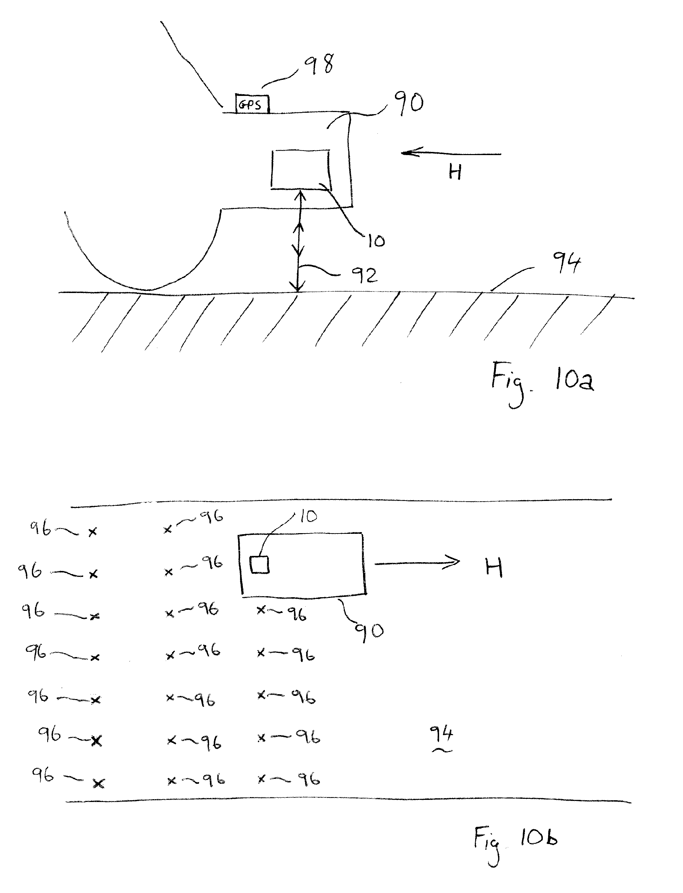

Yet another alternative use of the profiling device 10 is illustrated in Figs. 10a and 10b. In Fig. 10a, the profiling device 10 is mounted upon a vehicle 90 travelling in a direction indicated by arrow H and arranged to emit pulses of light 92 downwards towards a road surface 94 in order to map the road surface 94. The time taken for the reflected pulse of light to return to the profiling device 10 in the vehicle 90 will depend on the distance between the profiling device 10 and the road surface 94, and will indicate "peaks" and "troughs" in the road surface 94.

In Fig. 10b this arrangement is shown in plan view and it shows the discrete points 96 at which the emitted pulses of light 92 are incident upon the road surface 94 as the vehicle 90 travels along the road in the direction indicated by arrow H.

The vehicle 90 is provided with a GPS device 98 in order to determine its position upon the road being profiled and so that the captured surface profile data can be combined with positional data obtained from GPS device 98.

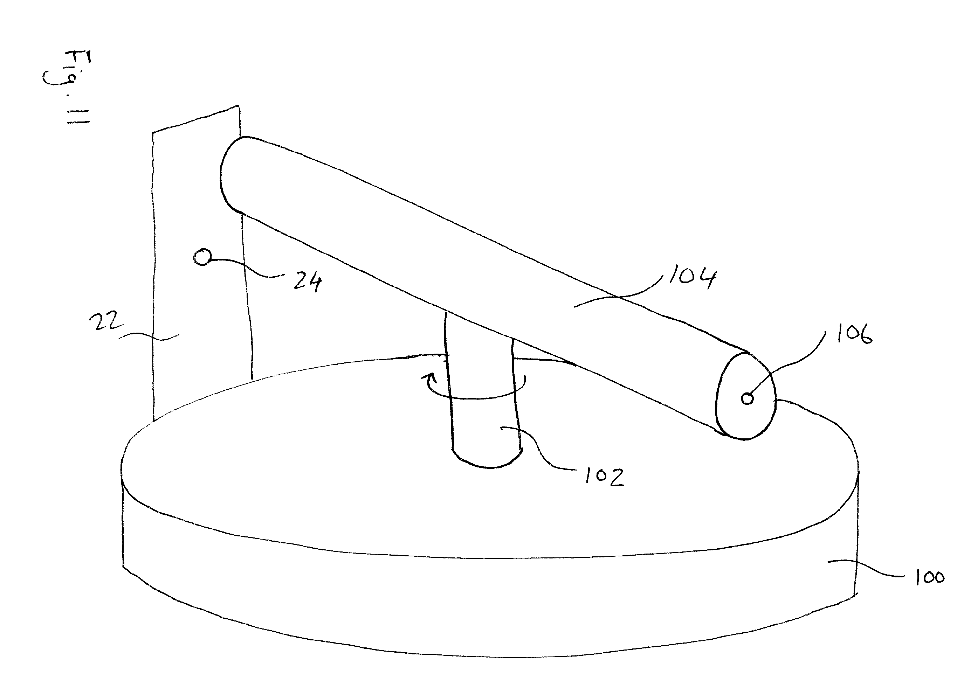

Figure 11 illustrates an alternative embodiment of the present invention. In this embodiment, there is provided a base portion 100 upon which is mounted a rotatable shaft 102 upstanding from the base portion 100. The shaft 102 is arranged to be driven by a motor (not shown) located in base portion 100. An emitter/detector housing member 104 is mounted at an end of said shaft 102 remote from the base portion 100. The emitter/detector housing member 104 is elongate and is arranged perpendicular to said shaft 102, and is also arranged to rotate with said shaft 102 such that it rotates in a plane parallel with the plane of the base portion 100.

The emitter/detector housing member 104 is provided at one end thereof with an aperture 106 through which a pulse of light emitted by a light emitter (not shown) housed within the emitter/detector housing member 104, can pass for transmission to a remote surface. The aperture 106 also allows a pulse of light reflected from said remote surface to pass into the emitter/detector housing member 104 for reception by a light detector (not shown).

The profiling device of this embodiment also includes a reference strip 22 and reference dot 24 which perform the same functions as in the earlier described embodiment.

In many of the above described embodiments a tracking system may be provided in the profiling device in order to allow mapping of an entire building as an operator walks around the building. In particular, the tracking system may be integral with the profiling device and may be either software based or mechanical based.

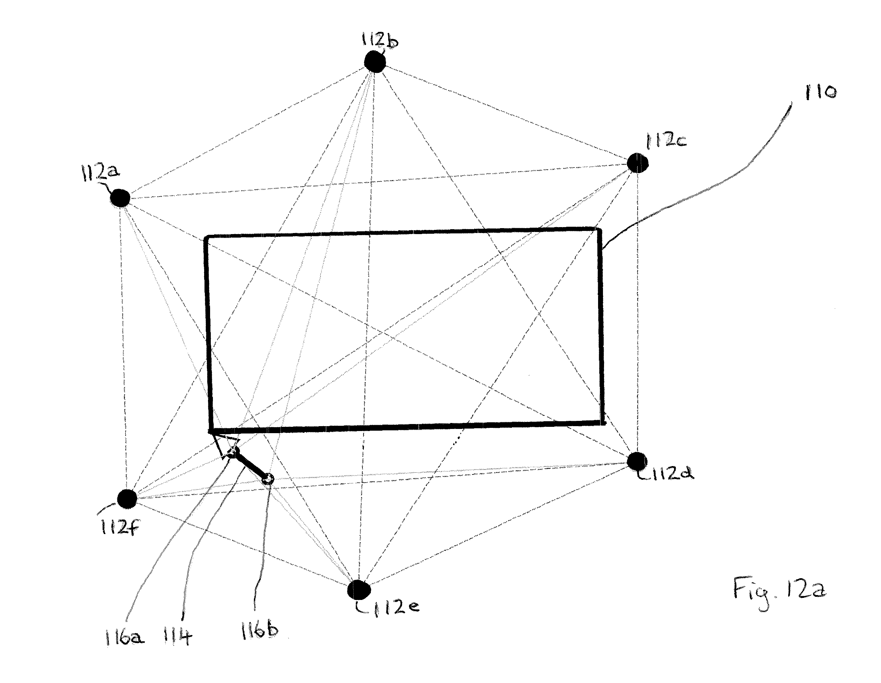

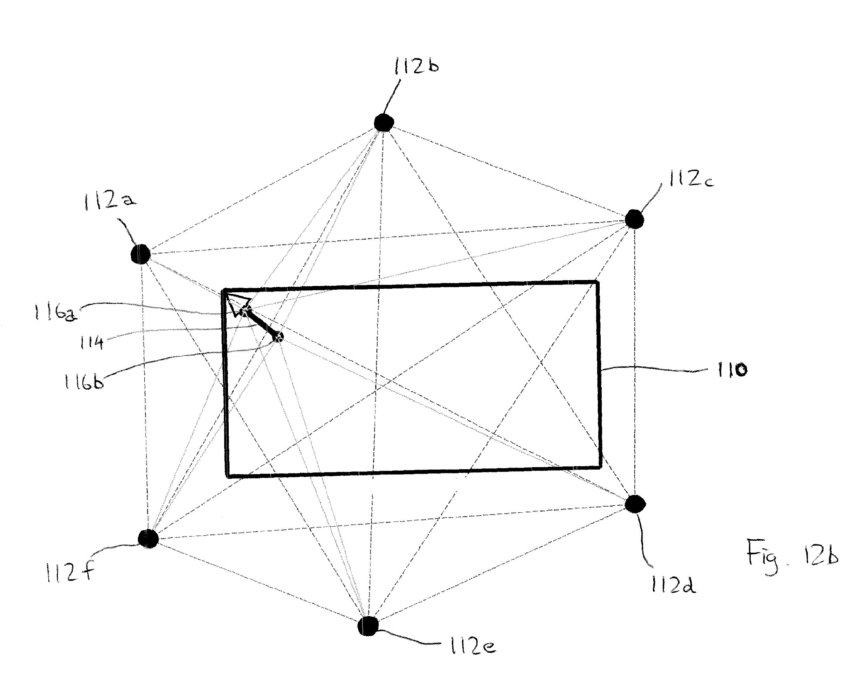

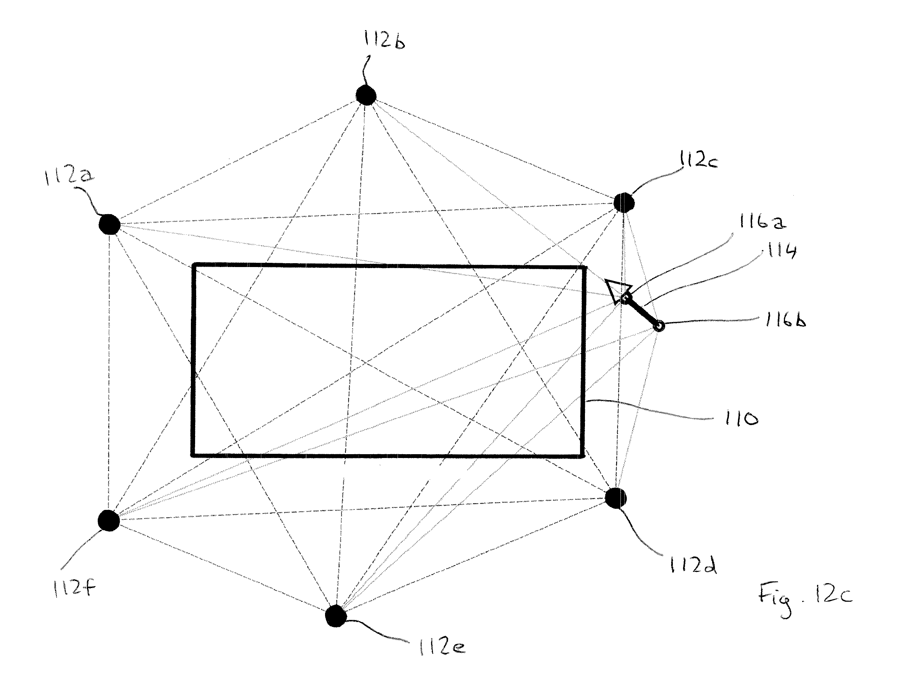

Figures 12a, 12b, and 12c illustrate a simplified arrangement of the present invention. This arrangement employs a network of microelectromechanical devices installed with wireless communications. These devices (or "Motes") preferably comprise sensors, processors, bidirectional wireless communications technology and a power supply. The Motes are arranged to gather data, run computations and communicate using two-way-band radio with other Motes in the network.

Figs. 12a - 12c illustrate a building 110 having Motes 112a-112f placed around the building 110 periphery. The figures show the Motes 112a-112f located on more than one plane around the building 110 periphery. Preferably, at least six Motes will be needed, and this is to ensure that positional information can be obtained in three dimensions.

The co-ordinates of each Mote 112a-112f are determined using conventional survey methods.

Alternatively, the relative positions of the Motes 112a-112f can be determined between themselves and then these relative positions can be tied into an existing co-ordinate system as required.

As noted above, each of the Motes 112a-112f can communicate with every other Mote 112a-112f within the network. By determining the time differences between these communications and matching these with the co-ordinates of the corresponding Motes 112a-112f, it is possible to determine a rigid network with a direct relationship between time and distance. This rigid network is illustrated by the dotted lines which run between Motes 112a-112f.

The profiling device of this arrangement comprises a wand 114, which is of fixed length, and which is provided with Motes 116a-116b at each end thereof. These Motes 116a-116b are arranged to communicate with the Motes 112a-112f of the rigid network. A varying network between the Motes 116a-116b of the wand 114 and the Motes 112a-112f is illustrated by solid lines.

Thus, when the wand is touched upon features/objects for which the location is required (e.g. walls within the building), the Motes 112a-112f of the rigid network communicate with the two Motes 114a-114b on the wand and so the 3D co-ordinates of the wand 114 can be calculated and, in turn, the direction in which the wand 114 is pointing in the horizontal and vertical axes can also be derived.

A third Mote (not shown) on the wand 114 is arranged to act as a data logger and also instructs the network to store the relative position of the pointing end of the wand 114. Therefore, by moving the wand around the building and touching the wand upon features/objects within the building, 3D co-ordinate data for each feature/object can be obtained and stored in third Mote of the wand 114. This 3D co-ordinate data can then be transferred to a suitable processing means (e.g. a PC) so that a 3D drawing of the building can be created using a suitable drawing program (e.g. a CAD package).

The three Figs. 12a, 12b and 12c illustrate the wand 114 in different positions in the building 110 and so also in different positions in relation to the fixed network formed by Motes 112a-112f.

Preferably, the 3D co-ordinate data is transferred to the processing means in real-time and so the 3D drawing can also be created in real-time.

In the above described arrangement, the Motes 112a-112f are only arranged to be temporarily located within the building whilst the profiling process is carried out. However, in an alternative arrangement (particularly for complicated structures) the Motes are permanently located within the building structure and these Motes would then be automatically networked and co-ordinated and used as transceivers to obtain the co-ordinates of the wand.

In all of the above described embodiments and variations thereof (and the figures relating thereto) description (and illustration) of the power source for the profiling device has been omitted for clarity purposes. However, the power source may comprise a battery pack housed within the profiling device (which is in keeping with the profiling device's portable nature). The battery pack may comprise a rechargeable cell in a particular arrangement.

Although the above embodiments describe a profiling device 10 using pulses of light, other arrangements may use other forms of electromagnetic radiation.

It should be understood that the profiling device described above and as illustrated in the figures is merely exemplary in nature, and other types or configurations of profiling device can be used as well.

## Claims

1. A profiling device comprising an emitter arranged to emit a pulse of electromagnetic radiation towards a remote surface; a detection means arranged to receive the pulse of electromagnetic radiation once reflected from said remote surface; means for altering a direction from which successive pulses of electromagnetic radiation are emitted from said profiler to cause successively emitted pulses of electromagnetic radiation to be emitted in a plurality of different directions in the same plane throughout 360 degrees; an elapsed time measuring device for measuring the time between emission of a pulse of electromagnetic radiation in one of said plurality of different directions and reception of said pulse of electromagnetic radiation reflected from said remote surface; storage means for storing measured elapsed time data; and means for defining a reference position for indicating when said pulses of electromagnetic radiation have been emitted over the said 360 degrees.

2. A profiling device according to Claim 1, wherein said direction altering means comprises actuation means arranged to rotate both said emitter and detection means in common.

3. A profiling device according to Claim 1, wherein said direction altering means comprises actuation means arranged to rotate a mirror arrangement attached thereto, and wherein said mirror arrangement is arranged to receive incident pulses of electromagnetic radiation emitted by said emitter and subsequently reflect said pulses of electromagnetic radiation towards said remote surface, said mirror arrangement also arranged to receive incident pulses of electromagnetic radiation reflected by said remote surface and subsequently reflect said incident pulses of electromagnetic radiation reflected by said remote surface towards said detection means.

4. A profiling device according to Claim 2 or Claim 3, wherein said actuation means is arranged to rotate in a continuous manner and said pulses of electromagnetic radiation are emitted at predefined intervals.

5. A profiling device according to Claim 2 or Claim 3, wherein said actuation means is arranged to rotate in a stepwise manner and said pulses of electromagnetic radiation are emitted at each step during rotation by said actuation means.

6. A profiling device according to any one or more of Claims 2 to 5, wherein said actuation means comprises a motor.

7. A profiling device according to any one or more of the preceding claims, further comprising a control means arranged to control operation of said profiling device.

8. A profiling device according to any one or more of the preceding claims, further comprising an interface to enable data stored in said storage means to be transferred to a peripheral device.

9. A profiling device according to any one or more of the preceding claims, wherein said electromagnetic radiation comprises light.

10. A profiling device according to Claim 9, wherein said light comprises visible light.

11. A profiling device according to Claim 10, wherein said emitter comprises a laser emitter.

12. A profiling device according to Claim 10 or Claim 11, wherein said detection means comprises a photodetector.

13. A profiling device according to any one or more of the preceding claims, wherein said means for defining a reference position comprises an element mounted upon said profiling device at a fixed distance from said emitter and comprising surfaces of differing reflectivity.

14. A profiling device according to any one or more of the preceding claims for use in creating a two dimensional view of the surface of a feature being profiled.

15. A profiling device according to Claim 14, wherein said two dimensional view comprises one of a plan view or a side view.

16. A profiling device according to Claim 14 or Claim 15, wherein said surface of said feature being profiled comprises walls of a building.

17. A profiling device according to any one or more of Claims 1 to 13 for use in counting objects passing said profiling device.

18. A profiling device according to Claim 17, wherein said objects comprise vehicles.

19. A method of profiling a surface comprising: emitting a pulse of electromagnetic radiation towards a remote surface; detecting the pulse of electromagnetic radiation once reflected from said remote surface; altering a direction from which successive pulses of electromagnetic radiation are emitted to cause successively emitted pulses of electromagnetic radiation to be emitted in a plurality of different directions in the same plane throughout 360 degrees; measuring an elapsed time between emission of a pulse of electromagnetic radiation in one of said plurality of different directions and reception of said pulse of electromagnetic radiation reflected from said remote surface; storing said elapsed time data; and defining a reference position for indicating when said pulses of electromagnetic radiation have been emitted over the said 360 degrees.

20. A method according to Claim 19, wherein said altering step comprises rotating both an emitter for emitting said pulse of electromagnetic radiation and a detector for receiving the pulse of electromagnetic radiation once reflected in common.

21. A method according to Claim 19, wherein said altering step comprises rotating a mirror arrangement, where said mirror arrangement is arranged to receive incident pulses of electromagnetic radiation emitted by an emitter in said emission step and subsequently reflect said pulses of electromagnetic radiation towards said remote surface, said mirror arrangement also arranged to receive incident pulses of electromagnetic radiation reflected by said remote surface and subsequently reflect said incident pulses of electromagnetic radiation reflected by said remote surface towards a detection means.

22. A method according to Claim 20 or Claim 21, wherein said rotation is continuous and said pulses of electromagnetic radiation are emitted at predefined intervals.

23. A method according to Claim 20 or Claim 21, wherein said rotation is stepwise and said pulses of electromagnetic radiation are emitted at each step during rotation.

24. A method according to any one or more of Claims 19 to 23, further comprising transferring stored elapsed time data to a peripheral device.

25. A method according to any one or more of Claims 19 to 24, wherein said electromagnetic radiation comprises light.

26. A method according to Claim 25, wherein said light comprises visible light.

27. A profiling device comprising at least one processing device arranged to communicate with a network of processing devices located in a fixed relationship relative to each other at various positions about a structure to be profiled, said at least one processing device being arranged to communicate with each processing device of said network in order to allow the positional co-ordinates of the profiling device to be determined, and wherein a plurality of determined positional co-ordinates of said profiling device each corresponding to a particular location of the profiling device about the structure to be profiled enable a co-ordinate map of at least one of vertices, edges and surfaces of the structure to be obtained.

28. A profiling device according to Claim 29, wherein said at least one processing device of said profiling device and said processing devices of said network comprise microelectromechanical devices arranged to communicate with each other wirelessly.

29. A profiling device according to Claim 27 or 28, wherein each of the processing devices of said network is arranged to transmit a signal to the at least one processing device of the profiling device and, upon receipt of such signals, the at least one processing device of the profiling device is arranged to transmit a corresponding return signal to each of the respective processing devices of said network, each processing device of said network being arranged to measure the elapsed time between transmission of said signal and reception of said corresponding return signal and for storing said elapsed time data, wherein the position of the profiling device is determined by correlating the elapsed time data stored in each processing device of the network and converting such data to positional data.

30. A profiling device according to any one or more of Claims 23 to 25, wherein said profiling device comprises an elongate member with a processing device at each end thereof.

31. A profiling device according to Claim 26, wherein said profiling device comprises an additional processing device for storing positional data of said profiling device received from said network of processing devices.

32. A profiling device according to Claim 31, wherein said additional processing device is configured to allow transfer of positional data stored thereon to a processing means.

33. A profiling device according to any one or more of Claims 27 to 32, wherein said at least one processing device of said profiling device and said processing devices of said network comprise Motes.
